# EUROPEAN PATENT APPLICATION

(11) **EP 4 481 865 A1**
(43) Date of publication of application: **25.12.2024**
(21) Application number: 22927270.3
(22) Date of filing: 20.10.2022
(51) Int. Cl.: H01M 8/0668, B63H 21/17, B63J 3/04, H01M 8/00, H01M 8/04014, H01M 8/12

(54) **FUEL CELL POWER GENERATION SYSTEM**

(30) Priority: 17.02.2022 JP 2022023014
(71) Applicant: Mitsui O.S.K. Lines, Ltd., Tokyo 105-8688 (JP)
(72) Inventor: UMEMURA, Hitomi, Tokyo 105-8688 (JP); NAKAMURA, Masaki, Tokyo 105-8688 (JP)
(74) Representative: Meissner Bolte Partnerschaft mbB
(86) International application number: PCT/JP2022/039086
(87) International publication number: WO 2023/157376

(57) **Abstract**

A fuel cell power generation system (10) includes a fuel cell (1) generating electric power with a fuel, a condenser (4) extracting mixed gas of hydrogen and carbon dioxide contained in water vapor discharged from the fuel cell (1), a carbon dioxide separation device (5) separating the hydrogen and the carbon dioxide from the mixed gas extracted by the condenser (4), a hydrogen supply path supplying the hydrogen separated by the carbon dioxide separation device (5) to the fuel cell (1), and a carbon dioxide liquefying device (6) liquefying the carbon dioxide separated by the carbon dioxide separation device (5).

## Description

### Technical Field

The present invention relates to a fuel cell power generation system.

### Background Art

In general, liquefied natural gas (LNG) is used as fuel for fuel cells.

However, part of hydrogen contained in the LNG supplied to fuel cells is discharged without reacting. Furthermore, when LNG is used as the fuel for fuel cells, carbon dioxide is emitted from the fuel cells. Since the emission of carbon dioxide is concerned about the influence to the global environment, its suppression is required.

### Summary of Invention

An object of embodiments of the present invention is to provide a fuel cell power generation system that improves the consumption efficiency of hydrogen contained in fuel and suppresses the emission of carbon dioxide.

A fuel cell power generation system according to an aspect of the present invention includes a fuel cell generating electric power with a fuel, a condenser extracting mixed gas of hydrogen and carbon dioxide contained in water vapor discharged from the fuel cell, component separation means for separating the hydrogen and the carbon dioxide from the mixed gas extracted by the condenser, a hydrogen supply path supplying the hydrogen separated by the component separation means to the fuel cell, and carbon dioxide liquefaction means for liquefying the carbon dioxide separated by the component separation means.

### Brief Description of Drawings

FIG. 1 is a configuration diagram showing a configuration of a fuel cell power generation system according to a first embodiment of the present invention.
FIG. 2 is a configuration diagram showing an example of a configuration for reusing hydrogen contained in water vapor discharged from the fuel cell according to the first embodiment.
FIG. 3 is a configuration diagram showing an example of a configuration of a carbon dioxide liquefaction apparatus according to the first embodiment.
FIG. 4 is a configuration diagram showing a configuration of a fuel cell power generation system according to a second embodiment of the present invention.
FIG. 5 is a configuration diagram showing a configuration of a ship according to a third embodiment of the present invention.
FIG. 6 is a schematic diagram showing an overview of energy and substance flow in the ship according to the third embodiment.

### Mode for Carrying Out the Invention

### (First Embodiment)

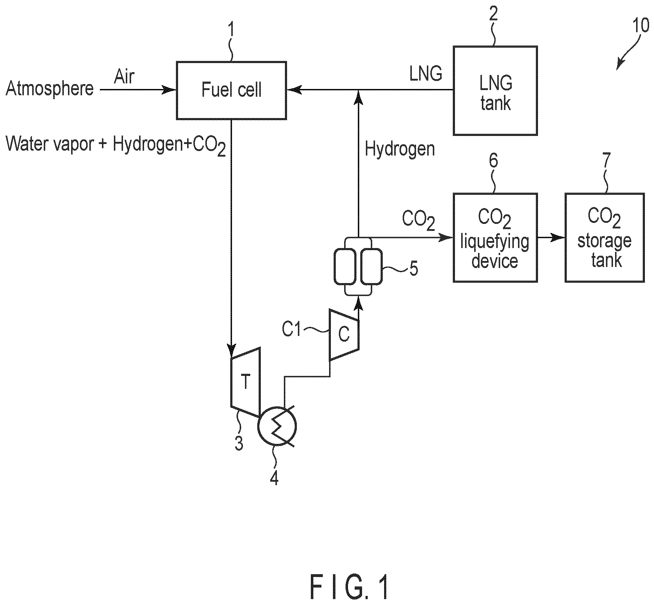

FIG. 1 is a configuration diagram showing a configuration of a fuel cell power generation system 10 according to a first embodiment of the present invention. The same portions in the drawings are denoted by the same reference numerals and redundant descriptions are omitted as appropriate.

The fuel cell power generation system 10 is not limited to being fixed and installed on land, sea, or the like, but may be installed in a mobile body such as a ship, a vehicle, or an aircraft.

The fuel cell power generation system 10 comprises a fuel cell 1, an LNG tank 2, a steam turbine 3, a condenser 4, a carbon dioxide separation device 5, a carbon dioxide liquefying device 6, and a carbon dioxide storage tank 7.

LNG is used as fuel for a fuel cell 1, but the system may be configured using liquefied petroleum gas (LPG), similarly to LNG. In addition to this, the fuel of the fuel cell 1 may be any substance as long as it contains hydrogen atoms and carbon atoms. For example, such fuel may be an alcohol such as ethanol or methanol. Furthermore, ammonia and hydrogen may be used as the fuel.

The fuel cell 1 is a solid oxide fuel cell (SOFC) that generates electric power using oxygen in the air taken from the atmosphere and hydrogen contained in natural gas obtained by vaporizing LNG supplied from the LNG tank 2. Incidentally, the fuel cell 1 is described as a solid oxide type fuel cell, but other types of fuel cells may be applied.

The fuel cell 1 supplies the generated electric power to the load (electric device). Water vapor discharged from the fuel cell 1 and containing carbon dioxide and hydrogen is sent to the steam turbine 3. The hydrogen contained in the water vapor is produced by reforming the gas supplied to the fuel cell 1 within the fuel cell 1 and is discharged without reacting in the fuel cell 1.

The LNG tank 2 is a facility for storing the LNG. The LNG tank 2 supplies gas obtained by vaporizing the LNG to the fuel cell 1 in accordance with the amount of power demand. Incidentally, the LNG tank 2 may be any facility where the LNG can be stored. In addition, when the fuel cell power generation system 10 is applied to a ship, the LNG tank 2 may be an LNG tank for transporting LNG or a fuel tank for storing LNG as a power source fuel. In addition, any number of LNG tanks 2 may be provided and the tanks may not be part of the configuration of the fuel cell power generation system 10. Furthermore, a gas compressor for supplying the LNG gas from the LNG tank may be provided.

The steam turbine 3 performs steam turbine power generation using the water vapor exhausted from the fuel cell 1. The power generation using the steam turbine 3 may be used in any manner. For example, the steam turbine 3 may supply the generated electric power together with the electric power generated by the fuel cell 1 to the load (electric device). Incidentally, the steam turbine 3 may not be provided and the water vapor exhausted from the fuel cell 1 may be sent directly to the condenser 4.

The condenser 4 is connected to the steam turbine 3. The condenser 4 converts the water vapor sent from the fuel cell 1 through the steam turbine 3 back into water and extracts hydrogen and carbon dioxide contained in the water vapor. The mixed gas containing hydrogen and carbon dioxide extracted from the condenser 4 is thus sent to the carbon dioxide separation device 5.

For example, a compressor C1 for compressing the mixed gas is provided in a path (for example, a pipeline) for sending the mixed gas from the condenser 4 to the carbon dioxide separation device 5. The compressor C1 compresses the mixed gas and sends the compressed mixed gas to the carbon dioxide separation device 5. Incidentally, the water extracted from the condenser 4 may be reused or discarded. When draining the water from the condenser 4 to the outside, a condensate pump for draining the water may be provided.

The carbon dioxide separation device (carbon capture system; CCS) 5 physically separates the mixed gas of hydrogen and carbon dioxide sent from the condenser 4 into carbon dioxide gas and hydrogen gas. For example, the carbon dioxide separation device 5 separates the mixed gas by pressure swing adsorption (PSA), but any method may be used to separate the mixed gas. After separating the mixed gas, the carbon dioxide separation device 5 supplies the hydrogen gas to the fuel cell 1 and sends the carbon dioxide gas to the carbon dioxide liquefying device 6.

For example, the carbon dioxide separation device 5 sends the separated hydrogen gas to path (for example, a pipeline) for sending from the LNG tank 2 to the fuel cell 1. By supplying hydrogen from the carbon dioxide separation device 5 to the fuel cell 1, hydrogen discharged without reacting in the fuel cell 1 is reused in this manner. Incidentally, a compressor for compressing the hydrogen gas may be provided in the path (for example, a pipeline) for sending the hydrogen gas from the carbon dioxide separation device 5 to the fuel cell 1. The carbon dioxide liquefying device 6 cools the carbon dioxide gas sent from the carbon dioxide separation device 5 to liquefy carbon dioxide. The carbon dioxide liquefying device 6 stores the liquefied carbon dioxide in the carbon dioxide storage tank 7. Incidentally, the carbon dioxide liquefying device 6 may be configured in any manner to liquefy the carbon dioxide gas.

The carbon dioxide stored in the carbon dioxide storage tank 7 can be freely disposed of at any location. For example, carbon dioxide may be disposed of by burying in the ground or the sea, may be treated with a device or the like, or may be used for applications that require carbon dioxide as a resource. Incidentally, the carbon dioxide storage tank 7 may not be provided and carbon dioxide liquefied by the carbon dioxide liquefying device 6 may be disposed of as it is.

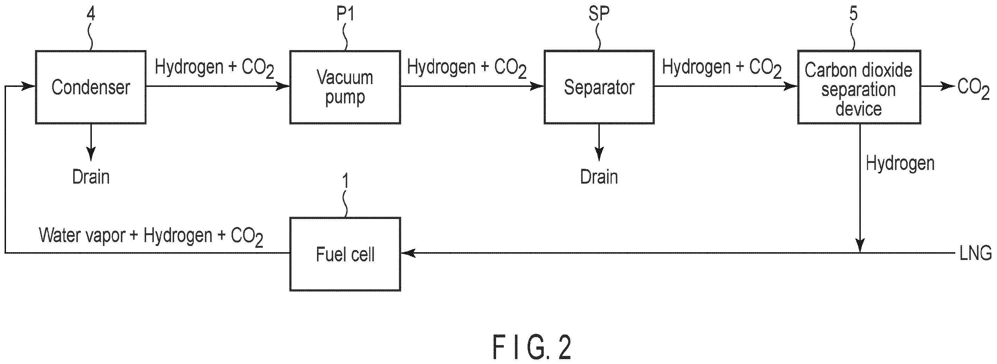

FIG. 2 is a configuration diagram showing an example of a configuration for reusing hydrogen contained in water vapor discharged from the fuel cell 1 according to the present embodiment. Incidentally, the configuration is not limited to that described here, but any configuration may be used.

A vacuum pump P1 and a separator SP are provided in the path (for example, pipeline) for supplying the mixed gas containing hydrogen and carbon dioxide from the condenser 4 to the carbon dioxide separation device 5.

The mixed gas containing hydrogen and carbon dioxide is supplied from the condenser 4 to the vacuum pump P1. The vacuum pump P1 sends the mixed gas containing hydrogen and carbon dioxide, which is supplied from the condenser 4, to the separator SP while keeping the condenser 4 in vacuum.

The separator SP removes impurities (for example, water) other than hydrogen gas and carbon dioxide gas from the mixed gas supplied from the vacuum pump P1. The separator SP supplies the extracted mixed gas containing hydrogen and carbon dioxide to the carbon dioxide separation device 5. The carbon dioxide separation device 5 separates the mixed gas into hydrogen gas and carbon dioxide gas. The separated hydrogen gas is reused in the fuel cell 1. The separated carbon dioxide gas is stored in the carbon dioxide storage tank 7 via the carbon dioxide liquefying device 6.

Incidentally, the vacuum pump P1 and the separator SP may not be provided and the mixed gas discharged from the condenser 4 may be sent directly to the carbon dioxide separation device 5.

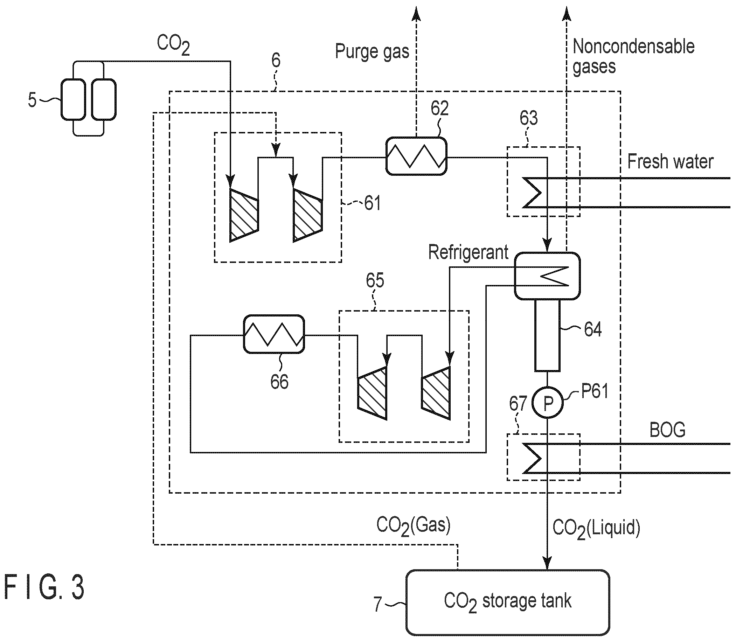

FIG. 3 is a configuration diagram showing an example of the configuration of the carbon dioxide liquefying device 6 according to this embodiment. Incidentally, the described configuration of the carbon dioxide liquefying device 6 is an example, and any configuration capable of liquefying the carbon dioxide gas may be used.

The carbon dioxide liquefying device 6 comprises a carbon dioxide compressor 61, a dehumidification device 62, a first heat exchanger 63, a carbon dioxide liquefier 64, a refrigerator 65, a refrigerant condenser 66, and a second heat exchanger 67.

The carbon dioxide compressor 61 takes in and compresses the carbon dioxide gas separated by the carbon dioxide separation device 5. The carbon dioxide compressor 61 sends the compressed carbon dioxide gas to the dehumidification device 62. The carbon dioxide compressor 61 may take in the carbon dioxide vaporized inside the carbon dioxide storage tank 7 in addition to the carbon dioxide gas from the carbon dioxide separation device 5 and compress them together.

The dehumidification device 62 dries the carbon dioxide gas sent from the carbon dioxide compressor 61. The purge gas is thereby released from the carbon dioxide gas. The dehumidification device 62 sends the dried carbon dioxide gas to the first heat exchanger 63. Incidentally, the dehumidification device 62 may not be provided.

The first heat exchanger 63 cools the carbon dioxide gas sent from the dehumidification device 62 with fresh water. The first heat exchanger 63 sends the cooled carbon dioxide gas to the carbon dioxide liquefier 64. Incidentally, when the fuel cell power generation system 10 is mounted on a ship, water (seawater or the like) pumped up from outside the ship by a water intake pump or the like may be used instead of fresh water.

The carbon dioxide liquefier 64 cools and liquefies the carbon dioxide gas sent from the first heat exchanger 63. Noncondensable gases that are not condensed thereby escape from the carbon dioxide. The carbon dioxide liquefier 64 sends the liquefied carbon dioxide to the second heat exchanger 67.

The carbon dioxide liquefier 64 cools the carbon dioxide gas with a refrigerant. The refrigerant used to cool the carbon dioxide gas is sent to the refrigerator 65 and cooled. The refrigerant cooled by the refrigerator 65 is sent to the refrigerant condenser 66 and compressed. The refrigerant compressed by the refrigerant condenser 66 is supplied to the carbon dioxide liquefier 64 and used to cool the carbon dioxide gas.

The second heat exchanger 67 cools the liquefied carbon dioxide sent from the carbon dioxide liquefier 64 with boil off gas (BOG). The BOG is gaseous natural gas that is generated by vaporizing part of the LNG stored in the LNG tank 2 by heat input. The second heat exchanger 67 cools and sends the liquefied carbon dioxide to the carbon dioxide storage tank 7. For example, the BOG that has been used for cooling and warmed is supplied to the fuel cell 1 as fuel.

According to the present embodiment, hydrogen and carbon dioxide contained in the water vapor discharged from the fuel cell 1 can be extracted separately by providing the condenser 4 and the carbon dioxide separation device 5. The consumption efficiency of hydrogen contained in the LNG can be improved by supplying the extracted hydrogen to the fuel cell 1. The carbon dioxide discharged from the fuel cell 1 can be managed by extracting carbon dioxide from water vapor discharged from the fuel cell 1. As a result, the fuel cell power generation system 10 can avoid emitting carbon dioxide into the atmosphere.

Electric power can be generated by the water vapor discharged from the fuel cell 1, by providing the steam turbine 3 in the middle of the path through which the water vapor is discharged from the fuel cell 1 to the condenser 4.

The energy efficiency of the fuel cell power generation system 10 can be improved by cooling carbon dioxide using the BOG in the carbon dioxide liquefying device 6 and supplying the BOG used for cooling to the fuel cell 1.

### (Second Embodiment)

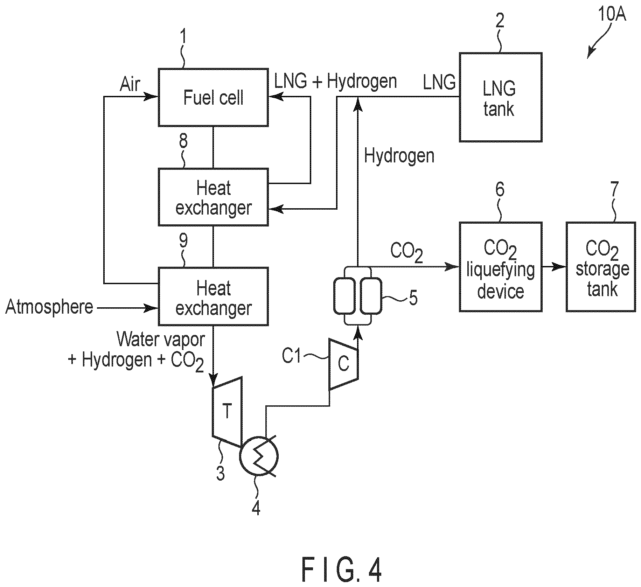

FIG. 4 is a configuration diagram showing a configuration of a fuel cell power generation system 10A according to a second embodiment of the present invention.

The fuel cell power generation system 10A is obtained by adding a first heat exchanger 8 and a second heat exchanger 9 to the fuel cell power generation system 10 according to the first embodiment shown in FIG. 1. The other points are the same as those in the first embodiment.

The first heat exchanger 8 performs heat exchange such that the gas supplied to the fuel cell 1 as the fuel is heated by the water vapor discharged from the fuel cell 1. As a result, the gas supplied to the fuel cell 1 is heated and the water vapor discharged from the fuel cell 1 is cooled. The gas heated by the first heat exchanger 8 is supplied to the fuel cell 1. The water vapor cooled by the first heat exchanger 8 is sent to the second heat exchanger 9. Incidentally, the gas that is the fuel heated by the first heat exchanger 8 may or may not contain the hydrogen gas supplied from the carbon dioxide separation device 5.

The second heat exchanger 9 performs heat exchange such that air (oxygen) taken in from the atmosphere to be supplied to the fuel cell 1 is heated by water vapor sent from the first heat exchanger 8. As a result, the air supplied to the fuel cell 1 is heated and the water vapor discharged from the fuel cell 1 is cooled. The air heated by the second heat exchanger 9 is supplied to the fuel cell 1. The water vapor cooled by the second heat exchanger 9 is sent to the condenser 4 via the steam turbine 3.

Thus, the water vapor discharged from the fuel cell 1 is cooled by the first heat exchanger 8 and the second heat exchanger 9. In contrast, the gas (hydrogen-containing gas) and air (oxygen) supplied to the fuel cell 1 are heated by the first heat exchanger 8 and the second heat exchanger 9.

Incidentally, the first heat exchanger 8 and the second heat exchanger 9 may be replaced with each other. More specifically, the heat exchangers may be arranged such that the water vapor discharged from the fuel cell 1 is first cooled in the second heat exchanger 9 and then cooled in the first heat exchanger 8. Alternatively, only one of the first heat exchanger 8 and the second heat exchanger 9 may be provided.

According to the present embodiment, the overall energy efficiency of the fuel cell power generation system 10A can be improved in addition to the advantages of the first embodiment.

### (Third Embodiment)

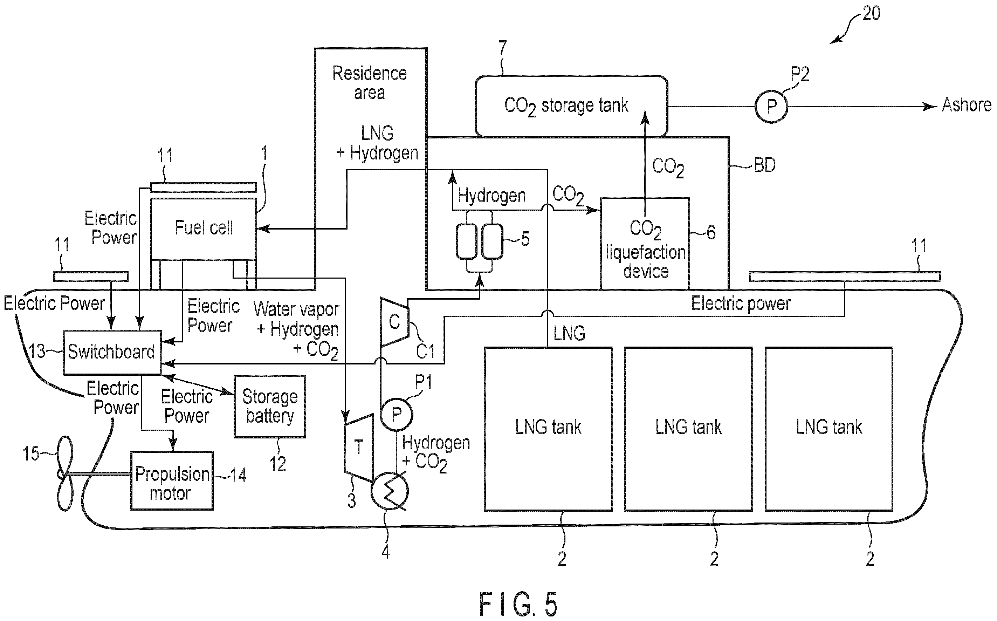

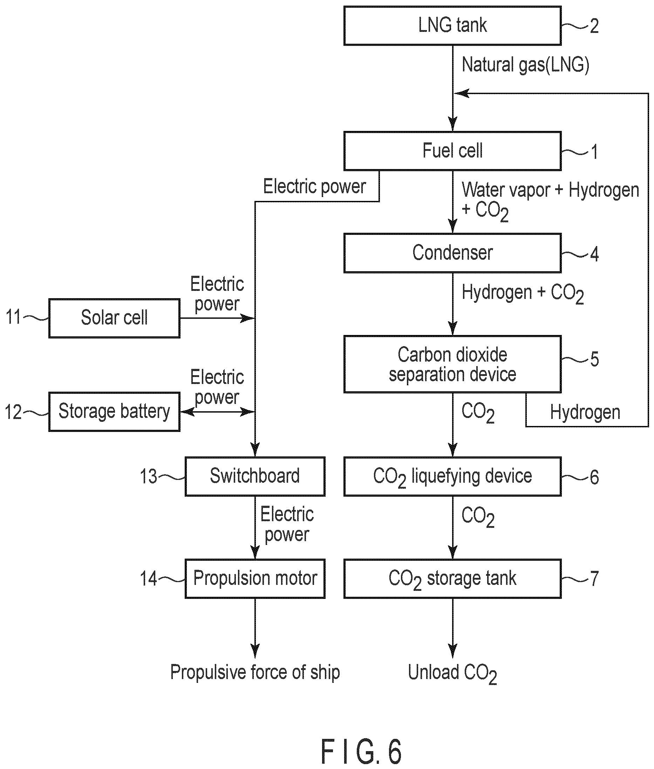

FIG. 5 is a configuration diagram showing a configuration of a ship 20 according to a third embodiment of the present invention. FIG. 6 is a schematic diagram showing an outline of energy and substance flow in the ship 20 according to the present embodiment.

The ship 20 is a ship on which the fuel cell power generation system 10 according to the first embodiment shown in FIG. 1 is mounted. The other points are the same as those in the first embodiment.

The ship 20 is a ship that generates power using LNG stored on board as fuel. The ship 20 may be any ship provided with facilities for storing the LNG. For example, the ship 20 may be an LNG ship intended to transport the LNG, a ship using the LNG as a power source fuel and intended to transport objects other than the LNG, or a ship intended not to transport objects.

The ship 20 comprises a fuel cell 1, a plurality of LNG tanks 2, a steam turbine 3, a condenser 4, a carbon dioxide separation device 5, a carbon dioxide liquefying device 6, a carbon dioxide storage tank 7, a plurality of solar cells 11, a storage battery 12, a switchboard 13, a propulsion motor 14, and a propeller 15. Incidentally, the installation locations of the devices and the like described below are only examples, and may be arranged at appropriate positions inside or outside the ship.

The fuel cell 1 supplies the generated electric power to the propulsion motor 14 via the switchboard 13. The fuel cell 1 may supply the generated electric power to electrical facilities on board other than the propulsion motor 14. For example, the fuel cell 1 may be provided on a deck of a hull or may be installed inside a hull for protection from external factors such as salt damage.

The LNG tank 2 is provided inside the hull, in an LNG ship. The LNG tanks 2 are tanks where the LNG is stored for transportation, on an LNG ship, but may be fuel tanks where the LNG is stored as the power source fuel. At least one LNG tank 2 may be provided.

For example, the ship 20 is configured as follows. The steam turbine 3 and the condenser 4 are provided inside the hull. The carbon dioxide separation device 5, the carbon dioxide liquefying device 6, and the carbon dioxide storage tank 7 are provided on the deck of the hull. A compressor C1 and a vacuum pump P1 are provided on the path for sending mixed gas from the condenser 4 to the carbon dioxide separation device 5. Alternatively, any device such as a compressor or pump may be provided in this path.

More specifically, the carbon dioxide separation device 5 and the carbon dioxide liquefying device 6 are installed inside a building BD installed on the deck of the hull. The carbon dioxide storage tank 7 is provided outside the building BD and near the building BD. The building BD protects devices provided inside, such as the carbon dioxide separation device 5 and the carbon dioxide liquefying device 6, from external factors such as salt damage. By providing the carbon dioxide separation device 5, the carbon dioxide liquefying device 6, and the carbon dioxide storage tank 7 close to each other, the path connecting the devices to send carbon dioxide can be shortened.

The carbon dioxide storage tank 7 is desirably installed at a location where the stored carbon dioxide can easily be unloaded. The carbon dioxide storage tank 7 may be installed detachably from the ship 20, may be configured to be connected to a transport pump P2 to send the liquefied carbon dioxide overboard, or may have both of the configurations. In addition, a cargo handling pump may be provided at the carbon dioxide storage tank 7 in addition to the transport pump in order to take out the carbon dioxide stored in the carbon dioxide storage tank 7. The carbon dioxide stored in the carbon dioxide storage tank 7 can be thus carried ashore.

The solar cells 11 are batteries that converts sunlight into electric energy. The solar cells 11 are installed in a place (for example, the deck or the like) on the surface of the ship 20, which is irradiated with sunlight. The solar cells 11 supply the generated electric power to the propulsion motor 14 via the switchboard 13. In addition, the solar cells 11 may supply the generated electric power to electric facilities on board other than the propulsion motor 14. Incidentally, the solar cells 11 may not be provided on the ship 20.

The storage battery 12 is connected to the switchboard 13. When the demanded power consumed by the propulsion motor 14 and the like is greater than the power supplied from the fuel cell 1 and the solar cells 11, the storage battery 12 supplements the supplied power with the stored electrical energy. In contrast, when the demanded power is less than the power supplied from the fuel cell 1 and the solar cells 11, the storage battery 12 is charged. Thus, the storage battery 12 is charged and discharged so as to balance the power demand and the power supply. Incidentally, the storage battery 12 may not be provided on the ship 20.

Each of the fuel cell 1 and the solar cells 11 may comprise a control unit for controlling the own operations, and a power converter for converting the output power into desired power. Similarly, the storage battery 12 may comprise a controller for controlling its own operation (charging, discharging, or the like) and a power converter for converting charging/discharging power into desired power.

The switchboard 13 is a device for supplying the electric power supplied from the fuel cell 1, the solar cells 11, and the storage battery 12 to the propulsion motor 14 and the like. When the storage battery 12 is charged, the switchboard 13 supplies the storage battery 12 with the electric energy supplied from the fuel cell 1 and the solar cells 11. Incidentally, the switchboard 13 may be supplied with electric power generated by the steam turbine 3. In addition, any number of switchboards 13 may be provided or the switchboards 13 may be omitted and switches or the like may be provided instead.

The propulsion motor 14 is a power source for obtaining a propulsive force of the ship 20. For example, the propulsion motor 14 is a DC motor. Since the propulsion motor 14 is driven by the DC power supplied from the fuel cell 1, the solar cells 11, and the storage battery 12, the number of power conversion circuits such as inverters can be reduced by employing the DC power, and the overall energy efficiency of the ship 20 is improved. Incidentally, the propulsion motor 14 may employ an AC motor.

The propulsion device 15 is a device that is connected to the propulsion motor 14 and converts the rotational force of the propulsion motor 14 into the propulsive force of the ship 20.

The flow of the energy and substance in the ship 20 will be described with reference to FIG. 6.

Natural gas obtained by vaporizing the LNG is supplied from the LNG tanks 2 to the fuel cell 1. As the fuel cell 1 performs a power generation operation (chemical reaction), water vapor containing hydrogen and carbon dioxide is discharged from the fuel cell 1. The condenser 4 removes moisture from the water vapor sent from the fuel cell 1 and extracts a mixed gas of hydrogen and carbon dioxide. The carbon dioxide separation device 5 separates the mixed gas into hydrogen gas and carbon dioxide gas.

The hydrogen gas separated by the carbon dioxide separation device 5 is supplied to the fuel cell 1 and reused. The carbon dioxide gas separated by the carbon dioxide separation device 5 is liquefied by the carbon dioxide liquefying device 6 and stored in the carbon dioxide storage tank 7. The carbon dioxide stored in the carbon dioxide storage tank 7 is unloaded and then disposed of.

The electric power generated by the fuel cell 1 and the solar cells 11 is supplied to the propulsion motor 14 via the switchboard 13. The storage battery 12 charges and discharges so as to balance the power supplied by the fuel cell 1 and the solar cells 11 and the demanded power consumed by the propulsion motor 14 and the like. The propulsive force of the ship 20 can be obtained by driving the propulsion motor 14 with the supplied electric power.

According to the present embodiment, the same advantages as those of the first embodiment can be obtained in the ship 20 by mounting the fuel cell power generation system 10 according to the first embodiment on the ship 20. In other words, the carbon dioxide discharged from the ship 20 can be managed, and the energy efficiency using the LNG, which is the fuel of the ship 20, can be improved.

Incidentally, the ship 20 may be equipped with the fuel cell power generation system 10A according to the second embodiment. As a result, the overall energy efficiency of the ship 20 can be improved more than that in a case where the fuel cell power generation system 10 according to the first embodiment is mounted on the ship 20.

Incidentally, additional advantages and modifications may easily be caused by those skilled in the art. Therefore, the invention in its broader aspects is not limited to the specific detailed and representative embodiments shown and described herein. Accordingly, various modifications may be made without departing from the spirit or scope of the general inventive concept defined by the appended claims and their equivalents.

## Claims

1. A fuel cell power generation system **characterized by** comprising:
a fuel cell generating electric power with a fuel;
a condenser extracting mixed gas of hydrogen and carbon dioxide contained in water vapor discharged from the fuel cell;
component separation means for separating the hydrogen and the carbon dioxide from the mixed gas extracted by the condenser;
a hydrogen supply path supplying the hydrogen separated by the component separation means to the fuel cell; and
carbon dioxide liquefaction means for liquefying the carbon dioxide separated by the component separation means.

2. The fuel cell power generation system of claim 1, **characterized by** further comprising:
a separator removing impurities other than the hydrogen and the carbon dioxide from the mixed gas extracted by the condenser.

3. The fuel cell power generation system of claim 1, **characterized by** further comprising:
a steam turbine generating electric power with the water vapor discharged from the fuel cell, wherein the condenser supplied with the water vapor discharged from the fuel cell, via the steam turbine.

4. The fuel cell power generation system of claim 1, **characterized by** further comprising:
a heat exchanger performing heat exchange to heat gas which is the fuel and cool the water vapor discharged from the fuel cell.

5. The fuel cell power generation system of claim 1, **characterized by** further comprising:
a heat exchanger performing heat exchange to heat air supplied to the fuel cell and cool the water vapor discharged from the fuel cell.

6. The fuel cell power generation system of claim 1, **characterized by** further comprising:
carbon dioxide storage means for storing the carbon dioxide liquefied by the carbon dioxide liquefaction means.

7. A ship **characterized by** comprising:
a hull;
a fuel storage tank for storage of fuel;
a fuel cell mounted on the hull to generate power with the fuel stored in the fuel storage tank;
a condenser extracting mixed gas of hydrogen and carbon dioxide contained in water vapor discharged from the fuel cell;
component separation means for separating the hydrogen and the carbon dioxide from the mixed gas extracted by the condenser;
a hydrogen supply path supplying the hydrogen separated by the component separation means to the fuel cell;
carbon dioxide liquefaction means for liquefying the carbon dioxide separated by the component separation means; and
a carbon dioxide storage tank for storage of the carbon dioxide liquefied by the carbon dioxide liquefaction means.

8. The ship of claim 7, **characterized by** further comprising:
a propeller driving with electric power generated by the fuel cell.

9. The ship of claim 7, **characterized by** further comprising:
a heat exchanger performing heat exchange to heat gas which is the fuel and cool the water vapor discharged from the fuel cell.

10. The ship of claim 7, **characterized by** further comprising:
a heat exchanger performing heat exchange to heat air supplied to the fuel cell and cool the water vapor discharged from the fuel cell.
